(19) Europäisches Patentamt / European Patent Office / Office européen des brevets

(11) **EP 3 684 021 B1**

(12) **EUROPEAN PATENT SPECIFICATION**

(45) Date of publication and mention
of the grant of the patent:
**04.12.2024 Bulletin 2024/49**

(21) Application number: **17925072.5**

(22) Date of filing: **15.09.2017**

(51) International Patent Classification (IPC):
**H04L 27/26** *(2006.01)* **H04J 13/10** *(2011.01)*
**H04J 13/16** *(2011.01)* **H04J 13/00** *(2011.01)*

(52) Cooperative Patent Classification (CPC):
**H04L 27/2613; H04J 13/0022; H04J 13/0059;
H04J 13/0077; H04J 13/10; H04L 27/26**

(86) International application number:
**PCT/JP2017/033591**

(87) International publication number:
**WO 2019/053901 (21.03.2019 Gazette 2019/12)**

(54) **USER TERMINAL AND WIRELESS COMMUNICATION METHOD**

BENUTZERENDGERÄT UND DRAHTLOSKOMMUNIKATIONSVERFAHREN

TERMINAL UTILISATEUR ET PROCÉDÉ DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.07.2020 Bulletin 2020/30**

(73) Proprietor: **NTT DOCOMO, INC.**
**Chiyoda-ku**
**Tokyo 100-6150 (JP)**

(72) Inventors:
• **MATSUMURA, Yuki**
 **Tokyo 100-6150 (JP)**
• **TAKEDA, Kazuki**
 **Tokyo 100-6150 (JP)**
• **NAGATA, Satoshi**
 **Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
**US-A1- 2012 269 285**

• CATT: "On short PUCCH formats supporting
more than two UCI bits", vol. RAN WG1, no.
Nagoya, Japan; 20170918 - 20170921, 12
September 2017 (2017-09-12), XP051329510,
Retrieved from the Internet
<URL:http://www.3gpp.org/ftp/tsg_ran/WG1_RL
1/TSGR1_AH/NR_AH_1709/Docs/> [retrieved on
20170912]
• CATT: "Further details of short PUCCH for more
than two UCI bits", vol. RAN WG1, no. Prague,
Czechia; 20170821 - 20170825, 20 August 2017
(2017-08-20), XP051315217, Retrieved from the
Internet
<URL:http://www.3gpp.org/ftp/Meetings_3GPP_
SYNC/RAN1/Docs/> [retrieved on 20170820]
• NTT DOCOMO ET AL: "Sequence-based PUCCH
for UCI of up to 2 bits", vol. RAN WG1, no.
Hangzhou; 20170515 - 20170519, 6 May 2017
(2017-05-06), XP051262473, Retrieved from the
Internet
<URL:http://www.3gpp.org/ftp/tsg_ran/WG1_RL
1/TSGR1_89/Docs/> [retrieved on 20170506]
• ZTE: "Discussion on uplink DMRS design", vol.
RAN WG1, no. Hangzhou, China; 20170515 -
20170519, 14 May 2017 (2017-05-14),
XP051272357, Retrieved from the Internet
<URL:http://www.3gpp.org/ftp/Meetings_3GPP_
SYNC/RAN1/Docs/> [retrieved on 20170514]

- **NTT DOCOMO ET AL: "FDM-based PUCCH for UCI of more than 2 bits", vol. RAN WG1, no. Qingdao, P.R. China; 20170627 - 20170630, 17 June 2017 (2017-06-17), XP051305389, Retrieved from the Internet <URL:http://www.3gpp.org/ftp/tsg_ran/WG1_RL 1/TSGR1_AH/NR_AH_1706/Docs/> [retrieved on 20170617]**
- **"DMRS-based vs. Sequence-based PUCCH in short duration", 3GPP TSG RAN WG1 MEETING #88 RL-1702811, 17 February 2017 (2017-02-17), pages 1 - 9, XP051209956**

**Description**

Technical Field

The present invention relates to a user terminal and a radio communication method in next-generation mobile communication systems.

Background Art

In the Universal Mobile Telecommunications System (UMTS) network, the specifications of long-term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "Future Radio Access (FRA)," "5G (5th generation mobile communication system)," "5G+ (plus)," "New Radio (NR)," "New radio access (NX)," "Future generation radio access (FX)," "LTE Rel. 13," "LTE Rel. 14," "LTE Rel. 15" or later versions) are under study.

In the downlink (DL) of existing LTE systems (for example, LTE Rel. 8 to 13), multicarrier communication to use orthogonal frequency division multiplexing (OFDM) is performed. Meanwhile, in the uplink (UL), single-carrier communication to use a DFT-spread OFDM (Discrete Fourier Transform-Spread-Orthogonal Frequency Division Multiplexing (DFT-s-OFDM)) waveform (also referred to as "DFT spreading," "DFT precoding," etc.) is performed.

In the UL of existing LTE systems (for example, LTE Rel. 8 to 13), a UL control channel (which is also referred to as, for example, a "Physical Uplink Control Channel (PUCCH)" or a "long PUCCH," or the like) is allocated to resources that are determined based on the indices of resources (for example, control channel elements (CCEs)) where a DL control channel is allocated.

This long PUCCH is allocated to all symbols of the TTIs constituting both edge fields of the system band (or all symbols except for the last symbols). Also, in this long PUCCH, uplink control information (UCI) and the demodulation reference signal (DMRS) for the UCI are time-division-multiplexed (TDM), in order to prevent the peakto-average power ratio (PAPR) from increasing.

In the standard contribution entitled "On short PUCCH formats supporting more than two UCI bits" (R1-1715818), the author's disclose aspects for the design of the 1-symbol PUCCH format for more than 2bits UCI. The authors disclose that two options can be considered for the DMRS sequence, namely computer generated sequence/ZadoffChu (CGS/ZC) sequences and pseudo noise (PN) sequences and propose that the PN sequence used for PUSCH DMRS should be supported for short PUCCH with more than 2 bits UCI.

Citation List

Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

Summary of Invention

Technical Problem

Envisaging UL for future radio communication systems (for example, LTE Rel. 14 and later versions, NR or 5G), studies are underway to introduce a UL control channel (which is also referred to as, for example, a "short PUCCH" or simply "PUCCH," or the like) having a shorter time length (for example, one or two symbols) than in existing LTE systems (for example, LTE Rel. 8 to 13).

Also, envisaging this UL for future radio communication systems, studies are underway to use a cyclic prefix (CP)-OFDM waveform (also referred to simply as "OFDM waveform"), in addition to the DFT-s-OFDM waveform. Consequently, studies are also underway to frequency-division-multiplex (FDM) UCI and a reference signal (for example, DMRS) in the short PUCCH.

However, if UCI and a DMRS are frequency-division-multiplexed (FDM) in the short PUCCH, the base sequence of this reference signal cannot be generated properly, and, as a result, the reference signal may not be transmitted properly.

It is therefore an object of the present invention to provide a user terminal and a radio communication method, whereby a DMRS that is frequency-division-multiplexed (FDM) with UCI can be transmitted properly.

Solution to Problem

The present invention provides a terminal, in accordance with claim 1.
The present invention also provides a radio communication method, in accordance with claim 6.

Advantageous Effects of Invention

According to the present invention, a DMRS that is frequency-division-multiplexed (FDM) with UCI can be transmitted properly.

Brief Description of Drawings

FIGs. 1A and 1B are diagrams to show examples of short PUCCHs;
FIGs. 2A to 2D are diagrams to show examples of CG-CAZAC sequences according to a first example of the present invention;
FIG. 3 is a diagram to show a third example of control of a DMRS base sequence according to the first example;
FIGs. 4A and 4B are diagrams to show examples of allocation of PUCCH resources according to a second example of the present invention;
FIG. 5 is a diagram to show an example of PUCCH resource information according to the second example;
FIGs. 6A and 6B are diagrams to illustrate a first example of determining the sequence length according to the second example;
FIG. 7 is a diagram to illustrate the first example of determining the sequence length according to the second example;
FIGs. 8A and 8B are diagrams to illustrate a second example of determining the sequence length according to the second example;
FIG. 9 is a diagram to illustrate the second example of determining the sequence length according to the second example;
FIG. 10 is a diagram to show an exemplary schematic structure of a radio communication system;
FIG. 11 is a diagram to show an exemplary overall structure of a radio base station;
FIG. 12 is a diagram to show an exemplary functional structure of a radio base station;
FIG. 13 is a diagram to show an exemplary overall structure of a user terminal according to the present embodiment;
FIG. 14 is a diagram to show an exemplary functional structure of a user terminal according to the present embodiment; and
FIG. 15 is a diagram to show an exemplary hardware structure of a radio base station and a user terminal.

Description of Embodiments

Envisaging future radio communication systems, research is underway to support a UL control channel (hereinafter also referred to as a "short PUCCH" or simply or simply a "PUCCH," or the like) of a shorter duration than Physical Uplink Control CHannel (PUCCH) formats 1 to 5 of existing LTE systems (for example, LTE Rel. 8 to 13).
The short PUCCH (also referred to as "shortened PUCCH" or the like) has a given number of symbols (for example, one or two symbols) at a certain subcarrier spacing (SCS). For example, UCI comprised of more than two bits may be transmitted in a one-symbol PUCCH.
The SCS for the symbols of the short PUCCH may be the same as or different from (for example, higher than) the SCS for the symbols of the data channel. The data channel may be, for example, a downlink data channel (Physical Downlink Shared CHannel (PDSCH)), an uplink data channel (Physical Uplink Shared CHannel (PUSCH)) and so on.
Also, the number of frequency resources (for example, resource blocks (Physical Resource Blocks (PRBs)) that are available for the short PUCCH may be configured by higher layer signaling and/or physical layer signaling (for example, downlink control information (DCI)).
One or more PRBs that are contiguous and/or non-contiguous may be allocated to the short PUCCH. Moreover, ranks of priority (prioritization) may be applied to the allocation of contiguous PRBs and the allocation of non-contiguous PRBs. When prioritization is applied, for example, the allocation of contiguous PRBs may be prioritized.
Furthermore, in the short PUCCH, UCI and a reference signal (RS) may be time-division-multiplexed (TDM) or frequency-division-multiplexed (FDM). The RS may be, for example, the demodulation reference signal (DMRS) for use for demodulating the UCI.

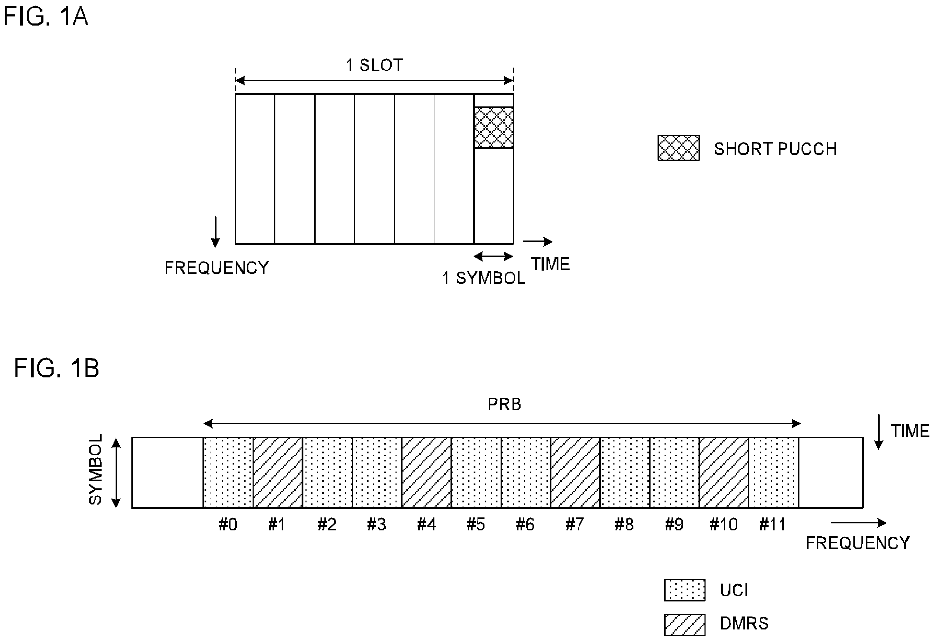

FIGs. 1 are diagrams to show examples of short PUCCHs. For example, FIG. 1A shows a slot where a short PUCCH is allocated to the last symbol. Note that, in FIG. 1A, one slot is comprised of seven symbols, but the number of symbols in a slot is not limited to this. Furthermore, the short PUCCH may be allocated to any symbol in the slot.

In FIG. 1A, the short PUCCH may be time-division-multiplexed (TDM) and/or frequency-division-multiplexed (FDM) with the PUSCH in the slot. Also, the short PUCCH may be time-division-multiplexed (TDM) and/or frequency-division-multiplexed (FDM) with a PDSCH and/or a DL control channel (hereinafter also referred to as "Physical Downlink Control CHannel (PDCCH)") in the slot.

In the short PUCCH shown in FIG. 1A, the UCI and the DMRS may be time-division-multiplexed (TDM) and/or frequency-division-multiplexed (FDM). When UCI and a DMRS are time-division-multiplexed (TDM), it is possible to prevent the PAPR from increasing even when the DFT-s-OFDM waveform is applied. Note that, referring to FIG. 1A, TDM of UCI and a DMRS in one symbol is implemented by applying an SCS (for example, 30 kHz) higher than the SCS of the other symbols (for example, 15 kHz) to a short PUCCH.

FIG. 1B shows an example of FDM between UCI and a DMRS in a one-symbol short PUCCH. Referring to FIG. 1B, UCI and a DMRS are frequency-division-multiplexed (FDM) on different resource elements (also referred to as "REs," "subcarriers," etc.) over a given number of PRBs. As shown in FIG. 1B, the DMRS may be allocated to a given number of REs (for example, four REs) per PRB. When the cyclic prefix (CP)-OFDM waveform (simply also referred to as "OFDM waveform") is applied, the UCI and the DMRS may be frequency-division-multiplexed (FDM).

For example, referring to FIG. 1B, the DMRS is mapped to the REs of indices #1, #4, #7, and #10 in one PRB, and the UCI is mapped to the REs of the other indices. Note that, the locations of the REs (DMRS RSs) to which the DMRS is mapped are not limited to those shown in FIG. 1B. The DMRS may be allocated to twelve REs in one PRB at equal intervals (for example, every two REs), and may be allocated to the four REs of indices #0, #3, #6 and #9, or to the four REs of indices #2, #5, #8 and #11, for example.

Research is underway on the use of (1) a pseudo-random sequence (which may be, for example, at least one of a pseudo noise (PN) sequence, a Gold sequence and an M sequence, and which is also referred to as the "first sequence"), and (2) a Constant Amplitude Zero Auto-Correlation (CAZAC) sequence (for example, a Zadoff-chu (ZC) sequence) and/or a sequence based on a CAZAC sequence) (which may be, for example, a computer-generated (CG) sequence like those set forth in 3GPP TS 36.211, Tables 5.5.1.2-1-4, and which is also referred to as a "CG-CAZAC sequence" or the like), as base sequences for the above-described DMRS.

Hereinafter, when a "CAZAC sequence" is simply mentioned, this will refer to both a CAZAC sequence (for example, a ZC sequence) and a sequence that is based on a CAZAC sequence (for example, a CG-CAZAC sequence). A CAZAC sequence may be referred to as a "second sequence."

Generally speaking, CAZAC sequences show lower correlations between base sequences than pseudo-random sequences. Consequently, when (2) CAZAC sequences are used as DMRS base sequences, the interference between cells may be reduced compared to the case where (1) pseudo random sequences are used. In addition, when multiple user terminals are code-division-multiplexed (CDM) in a cell, the use of (2) CAZAC sequences is effective in reducing interference between user terminals.

In existing LTE systems (LTE Rel. 8 to 14), the base sequence for a DMRS is generated using (2) a CAZAC sequence. To be more specific, it is specified that a ZC sequence is used when the base sequence has a sequence length of 36 or more, and a CG-CAZAC sequence is used when this sequence length is less than 36. Regarding the CG-CAZAC sequence, 30 types of sequences are defined for each of sequence lengths of 6, 12, 18 and 24, in tables (3GPP TS 36.211, Tables 5.5.1.2-1, 5.5.1.2-2, 5.5.1.2-3 and 5.5.1.2-4).

Now, the sequence length of the base sequence for a DMRS is determined based on the number of DMRS REs per PRB. For example, as shown in FIG. 1B, when a DMRS is mapped to four REs per PRB, the sequence length of this DMRS is preferably a multiple of four.

However, in existing LTE systems (LTE Rel. 8 to 14), only CG-CAZAC sequences of sequence length 6, 12, 18 and 24 are defined, and no CG-CAZAC sequences having other sequence lengths below 36 are defined. Therefore, as in existing LTE systems (LTE Rel. 8 to 14), when CG-CAZAC sequences are used as DMRS base sequences having sequence lengths below 36, it is necessary to newly define CC-CAZAC sequences of sequence lengths other than 6, 12, 18 and 24 (for example, when the number of DMRS REs per PRB is four, CG-CAZAC sequences of sequence lengths 4, 8, 16, 20, 28 and 32), and the load of designing the table might increase.

So, in accordance with one example of the present invention, the present inventors have focused on the fact that base sequences for a DMRS that is frequency-division-multiplexed (FDM) with UCI can be generated using (1) pseudo-random sequences, and come up with the idea of controlling and switching between (1) pseudo-random sequences and (2) CAZAC sequences for use for generating base sequences, based on the sequence length of these base sequences.

Now, embodiments of the present invention will be described below in detail with reference to the accompanying drawings. In the following description, cases will be exemplified where PN sequences are used as pseudo-random sequences, but the pseudo-random sequences may be sequences based on at least one of PN sequences, Gold sequences, and M sequences.

(First Example)

With the first example of the present invention, a case will be described below in which the generation of base sequences is controlled based on the length (sequence length) of the base sequence of DMRS.

<First Example of Control of Base Sequence>

In the following first example of control, a user terminal controls the generation of the base sequence of a DMRS based on whether the sequence length of the base sequence is a given value or not. To be more specific, when this sequence length is a given value, the user terminal generates the base sequence based on a CAZAC sequence, and, when this sequence length is not a given value, the user terminal generates the base sequence based on a PN sequence.
The given value may be, for example, at least one of 6, 12, 18, and 24. Furthermore, the given value may be at least one of the values obtained by multiplying each of 6, 12, 18 and 24 by n (for example, n=1 or a greater integer).
Here, the CAZAC sequence that is used to generate the base sequence of the DMRS may be a CG-CAZAC sequence (for example, a sequence that is defined in a table in advance, or a sequence that is generated by repeating a sequence and/or concatenating sequences), or may be a ZC sequence.

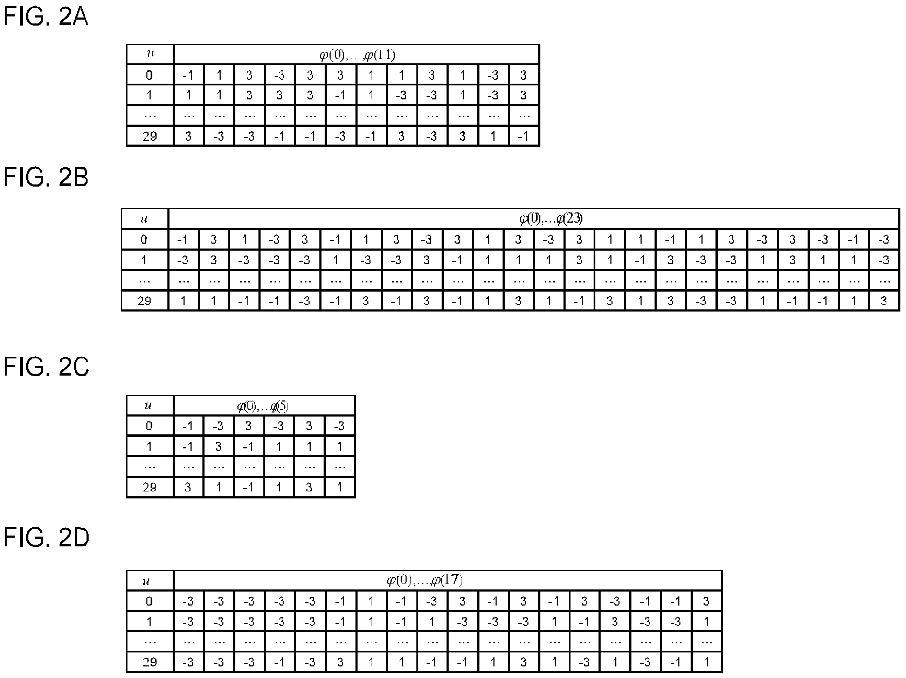

FIGs. 2 are diagrams to show examples of CG-CAZAC sequences according to the first example. FIGs. 2A, 2B, 2C, and 2D respectively show tables that define CG-CAZAC sequences $\varphi(n)$ of sequence length n (n=12, 24, 6 and 18). In each table, thirty types of CG-CAZAC sequences are defined, which are identified by group indices u (also referred to as "group numbers" or the like) of 0 to 29.
For example, when the sequence length of the base sequence of a DMRS is one of 6, 12, 18 and 24, the CAZAC sequence to use to generate the base sequence of the DMRS may be one CG-CAZAC sequence that is defined in advance in a table (see, for example, FIGs. 2A to 2D).
Also, when the sequence length of the base sequence of the DMRS is equal to an integer multiple of at least one of 6, 12, 18 and 24, the CAZAC sequence to use to generate the base sequence of the DMRS may be generated by repeating a CG-CAZAC sequence and/or concatenating CG-CAZAC sequences defined in advance in a table (see, for example, FIGs. 2A to 2D).
For example, a base sequence of sequence length 30 may be generated by repeating a CG-CAZAC sequence of sequence length 6 (for example, one of the CG-CAZAC sequences in FIG. 2C) five times. Alternatively, a base sequence of sequence length 30 may be generated by concatenating a CG-CAZAC sequence of sequence length 6 (for example, one of the CG-CAZAC sequences in FIG. 2C) and a CG-CAZAC sequence of sequence length 24 (for example, one of the CG-CAZAC sequences in FIG. 2B).
Also, when a PN sequence is used to generate the base sequence of the DMRS, the PN sequence may be defined based on, for example, a Gold sequence of sequence length 31, and represented by equation 1. This PN sequence may be referred to as a "pseudo-random sequence," a "Gold sequence," an "M sequence," or the like.

$$c(n) = \left(x_1(n + N_c) + x_2(n + N_c)\right)\mathrm{mod}2$$
$$x_1(n + 31) = \left(x_1(n + 3) + x_1(n)\right)\mathrm{mod}2 \qquad \dots \text{(Equation 1)}$$
$$x_2(n + 31) = \left(x_2(n + 3) + x_2(n + 2) + x_2(n + 1) + x_2(n)\right)\mathrm{mod}2$$

Here, the value of Nc may be a value (for example, 1600) that is defined in the specification, or may be a value that is reported (configured) from the radio base station to the user terminal. Also, the first m sequence may be initialized with $x_1(0)=1$, $x_1(n)=0$, n=1, 2, ..., 30, and the second m sequence may be initialized by an equation $C_{init}$, which is based on given parameters.
The parameters for initializing the above-described PN sequence (for example, the parameters taken into account in Cinit) may include, for example, at least one of the cell ID (physical cell ID), the user terminal's ID, the Radio Network Temporary Identifier (RNTI), the slot number, information to indicate the length of cyclic prefix (CP), and information reported through higher layer signaling.
Note that the PN sequence may be generated by using equations other than above equation 1, may be generated by using equations given by modifying above equation 1 as appropriate, or may be generated by using equations for generating pseudo-random sequences that are used to generate PUSCH DMRS base sequences in future radio communication systems (for example, LTE Rel. 15 or later version, NR or 5G).

<Second Example of Control of Base Sequence>

In a second example of control not falling under the scope of protection of the present claims, a user terminal may control the generation of the base sequence of a DMRS based on whether the sequence length of the base sequence is greater than or equal to and/or less than or equal to a given threshold (that is, based on whether the sequence length of the base sequence is greater and/or smaller than a given threshold). The given threshold may be one or more thresholds (for example, the first and second thresholds).

For example, when the sequence length is greater than or equal to (or greater than) the first threshold (for example, 30), the user terminal may use a CAZAC sequence (to be more specific, a ZC-based sequence) for the base sequence, and, when the sequence length is less than (or less than or equal to) the first threshold, the user terminal may use a PN sequence for the base sequence.

Alternatively, when the sequence length is greater than or equal to (or greater than) the second threshold (for example, 100), the user terminal may use a PN sequence for the base sequence, and, when the sequence length is less than (or less than or equal to) the second threshold, the user terminal may use a CAZAC sequence (to be more specific, a ZC-based sequence) for the base sequence.

<Third Example of Control of Base Sequence>

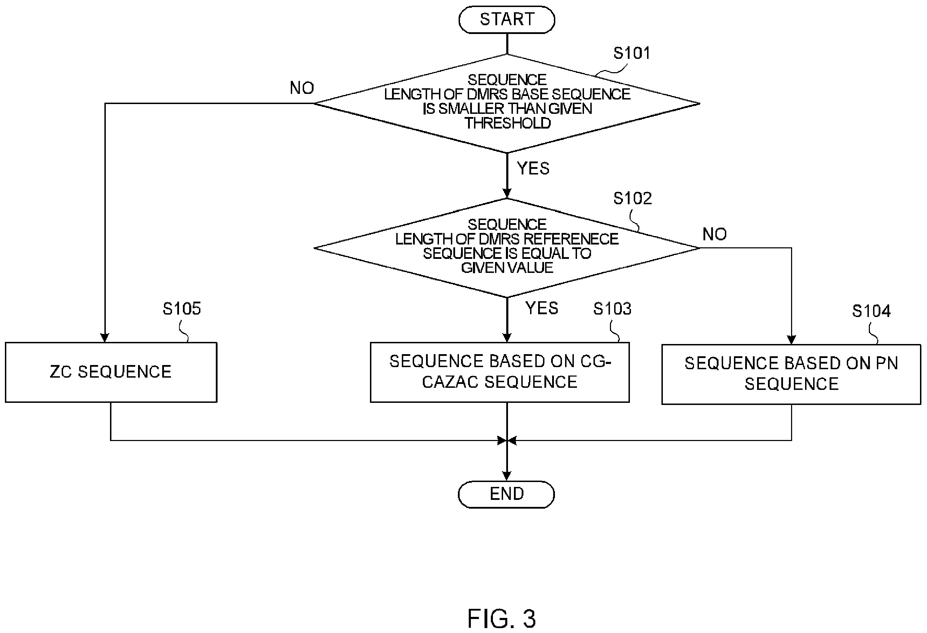

With a third example of control not falling under the scope of protection of the present claims, a combination of the first and second examples of control will be described. FIG. 3 is a diagram to show a third example of control of the DMRS base sequence according to the first example.

As shown in FIG. 3, when the sequence length of the base sequence of a DMRS is smaller than (or smaller than or equal to) a given threshold (for example, 30) (step S101: Yes) and its sequence length is equal to a given value (for example, one of 6, 12, 18 and 24, or an integer multiple of one of 6, 12, 18 and 24) (step S102: Yes), a user terminal may generate the base sequence based on a CG-CAZAC sequence (step S103).

For example, the base sequence may be represented by equation 2, which is based on the CG-CAZAC sequences shown in FIGs. 2A to 2D.

$$\bar{r}_{u,v}(n) = e^{j\varphi(n)\pi/4}, \quad 0 \leq n \leq M_{sc}^{RS} - 1 \qquad \dots \text{(Equation 2)}$$

Here, $M_{SC}^{RS}$ is the sequence length of the base sequence of the DMRS. $\varphi(n)$ is one of the CG-CAZAC sequences defined in the tables shown in FIGs. 2A to 2D.

In addition, as mentioned earlier, the base sequence may be generated by repeating a CG-CAZAC sequence and/or concatenating CG-CAZAC sequences shown in FIGs. 2A to 2D.

In addition, when the sequence length of the base sequence of a DMRS is smaller than (or smaller than or equal to) a given threshold (for example, 30) (step S101: Yes) and its sequence length is not equal to the given value (step S102: No), the user terminal may generate the base sequence based on a PN sequence (step S104).

For example, the base sequence may be generated based on a PN sequence that is initialized based on at least one of the cell ID, the user terminal's ID, the RNTI, the slot number, information to show the length of CP, and information that is reported through higher layer signaling.

Furthermore, when the sequence length of the base sequence of a DMRS is greater than or equal to (or greater than) a given threshold (for example, 30) (step S101: No), the user terminal may generate the base sequence based on a ZC sequence (step S105). This base sequence may be generated using a ZC sequence.

For example, the base sequence may be defined by cyclic extension of a ZC (Zadoff-Chu) sequence, and represented by equation 3.

$$\bar{r}_{u,v}(n) = x_q(n \bmod N_{ZC}^{RS}), 0 \leq n \leq M_{SC}^{RS} - 1$$

$$\text{where} \quad x_q(m) = e^{-j\frac{\pi q m (m+1)}{N_{ZC}^{RS}}}, 0 \leq m \leq N_{ZC}^{RS} - 1$$

$$\dots \text{(Equation 3)}$$

Here, $M_{SC}^{RS}$ is the DMRS sequence length, m is the number of RBs, and $N_{SC}^{RB}$ is the number of subcarriers in an RB. $x_q(m)$ is the q-th ZC sequence, and $N_{ZC}^{RS}$ is determined by the maximum prime number fulfilling $N_{ZC}^{RS} < M_{SC}^{RS}$ (for example, the maximum number s - 1).

Note that, although not illustrated, when the sequence length of the base sequence of a DMRS is greater than or equal to (or greater than) the first threshold (for example, 30) (step S101: No), whether or not the sequence length is greater than or equal to (or greater than) a second threshold (for example, 100) may be further judged. The user terminal may generate the base sequence based on a ZC sequence when the sequence length is smaller than (or smaller than or equal to) the second threshold, and generate the base sequence based on a PN sequence when the sequence length is greater than or equal to (or greater than) the second threshold.

According to the first example, control is exerted so that, even when a DMRS base sequence having a sequence length that has not been defined in existing LTE systems (LTE Rel. 8 to 14) is used, a PN sequence and a CAZAC sequence (CG-CAZAC sequence and/or ZC sequence) are switched around and used to generate the base sequence based on the sequence length of the base sequence. Consequently, it is possible to properly select the base sequence for a DMRS that is frequency-division-multiplexed (FDM) with UCI, without increasing the load of designing the CG-CAZAC sequence table.

(Second Example)

With a second example, the method for determining the sequence length to use to control the base sequence of a DMRS will be described.

A user terminal may determine the sequence length of the base sequence of a DMRS based on the number of DMRS REs per PRB. Furthermore, the user terminal may determine this sequence length based on the number of contiguous PRBs used to transmit UCI, or based on the total number of PRBs used to transmit UCI. For example, when two PRBs are allocated to a short PUCCH and the number of DMRS REs per PRB is four, the sequence length of the base sequence of the DMRS may be eight (=4x2).

The number of DMRS REs per PRB may be determined in advance in the specification, or may be reported from the radio base station to the user terminal via higher layer signaling (for example, RRC signaling) and/or physical layer signaling (for example, DCI). For example, multiple candidates for the number of DMRS REs per PRB may be configured by higher layer signaling, and one of these candidates may be specified by DCI.

In addition, the number of PRBs to be allocated to the short PUCCH may be determined based on information (PUCCH resource information) that shows the resources for the short PUCCH (PUCCH resources). This PUCCH resource information may be reported from the radio base station to the user terminal via higher layer signaling (for example, RRC signaling) and/or physical layer signaling (for example, DCI).

Furthermore, the PUCCH resource information may include at least one of information that shows the PRBs for the short PUCCH (PRB information), information that shows the symbols for the short PUCCH (symbol information), information that shows the cyclic shift (CS) and/or the orthogonal cover code (OCC) to be applied to the base sequence of the DMRS (CS/OCC information), and information that shows the base sequence (base sequence information).

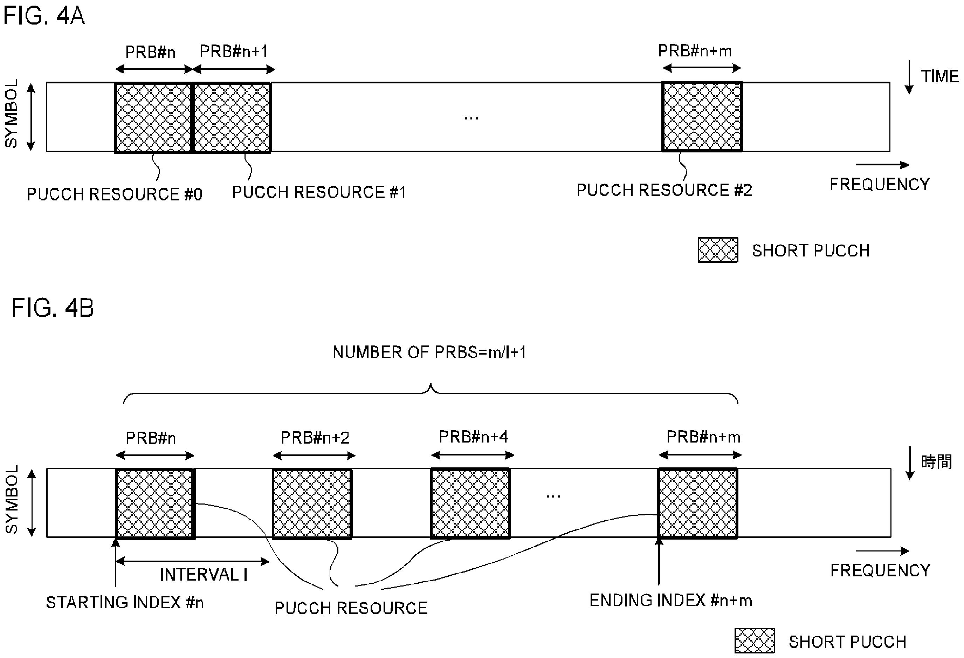

Here, for example, as shown in FIG. 4A, when each PUCCH resource is comprised of one PRB, the PRB information may be the PRB index of the PRB constituting each PUCCH resource (FIG. 4A).

Alternatively, as shown in FIG. 4B, when each PUCCH resource is comprised of one or more PRBs and one or more symbols, the PRB information may be the starting index of one or more PRBs that constitute the PUCCH resources, and the number of PRBs, or may be the starting index and the ending index of these one or more PRBs. Note that the interval I between PRBs in FIG. 4B may be determined in advance in the specification, or may be configured by higher layer signaling.

The symbol information is, for example, symbol indices. Also, the CS/OCC information is the CS index and/or the OCC index, or is an index to identify both the CS and the OCC. Also, the base sequence information is, for example, the group index (for example, u=#0 to #29 in FIGs. 2, which are also referred to as "group numbers" or the like) and/or the sequence index of the base sequence (for example, v=0 and 1, which are also referred to as "sequence numbers" or the like).

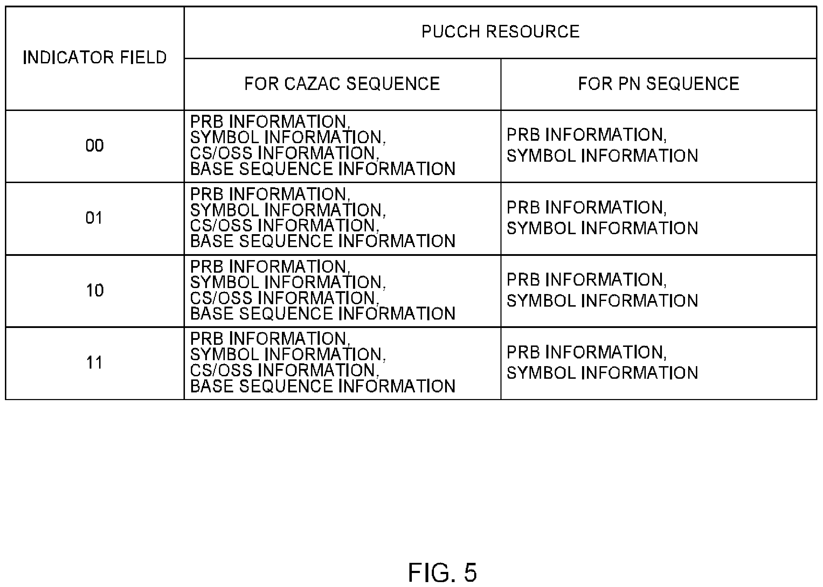

FIG. 5 is a diagram to show examples of PUCCH resource information according to the second example. For example, referring to FIG. 5, every value of a given field in DCI is associated with PUCCH resource information for CAZAC sequences (including CG-CAZAC sequences and ZC sequences) and PUCCH resource information for PN sequences.

As shown in FIG. 5, the PUCCH resource information for CAZAC sequences may include, for example, the above-noted PRB information, symbol information, CS/OCC information, and base sequence information. On the other hand, the PUCCH resource for PN sequences may include PRB information and symbol information, and may not include CS/OCC information and base sequence information.

Next, an example will be described in which the sequence length of the base sequence of a DMRS is determined when one or more PRBs are allocated to a short PUCCH.

<First Example of Determining Sequence Length>

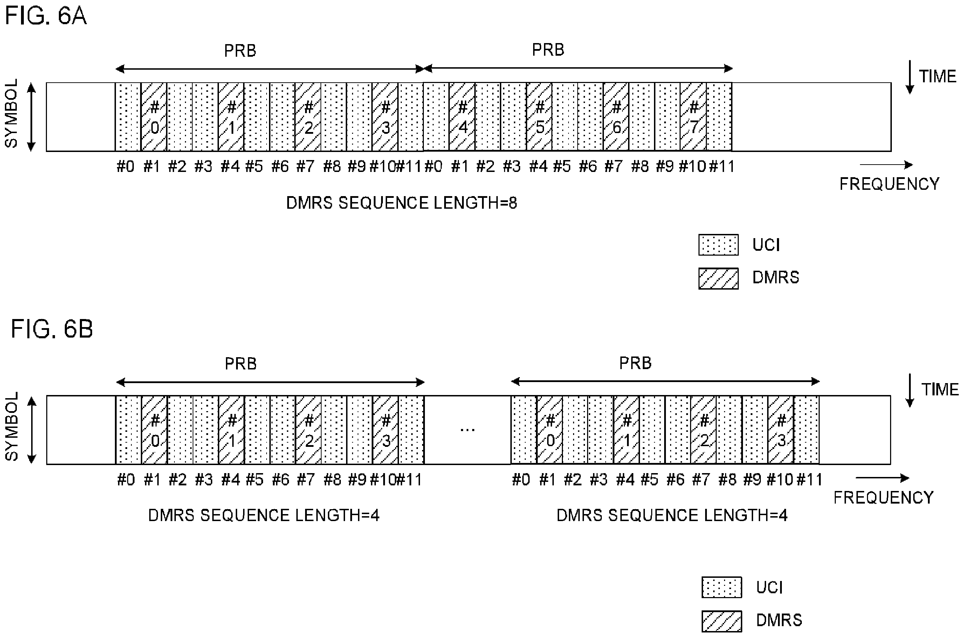

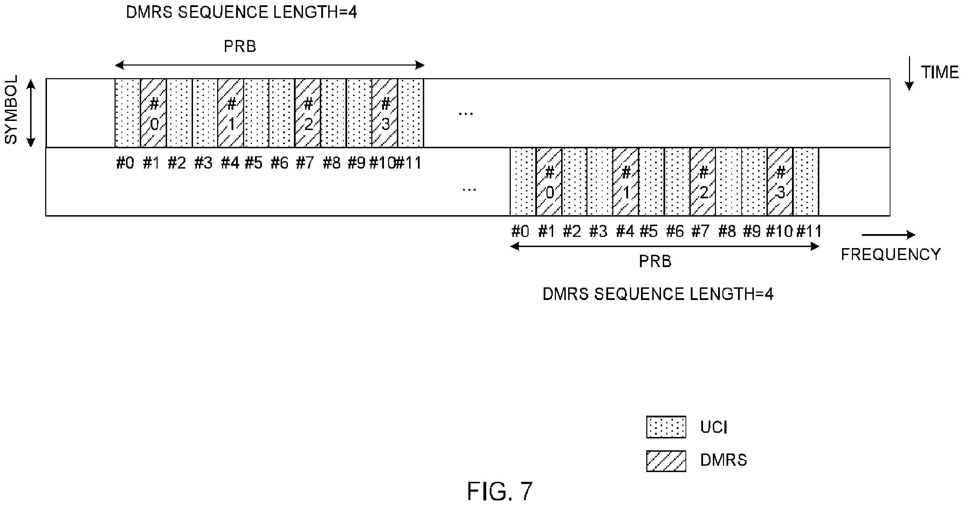

In the first example of determining the sequence length not falling under the scope of protection of the present claims, a user terminal may determine the sequence length of the base sequence of a DMRS based on the number of DMRS REs in contiguous PRBs. FIGs. 6 and FIG. 7 are diagrams to illustrate the first example of determining the sequence length according to the second example. FIGs. 6 show cases where a short PUCCH is comprised of one symbol, and FIG. 7 shows a case where a short PUCCH is comprised of two symbols.

Note that, FIGs. 6 and FIG. 7 are simply examples, and the number of symbols and PRBs that constitute the short PUCCH are not limited to those illustrated. In FIGs. 6 and FIG. 7, the number of DMRS REs per PRB is four, but this is by no means limiting.

As shown in FIG. 6A when a short PUCCH is comprised of two contiguous PRBs, eight DMRS REs are included in these two PRBs, so that the sequence length of the base sequence of the DMRS may be eight. Meanwhile, as shown in FIG. 6B, when a short PUCCH is comprised of two non-contiguous PRBs, four DMRS REs are included in each PRB, so that the sequence length of the base sequence of the DMRS may be four.

Furthermore, FIG. 7 shows a case where a short PUCCH is comprised of two symbols, and frequency hopping is applied between non-contiguous PRBs on a per symbol basis. In FIG. 7, too, a plurality of non-contiguous PRBs each include four DMRS REs, so that the sequence length of the base sequence of the DMRS may be four.

Between the non-contiguous PRBs shown in FIG. 6B and FIG. 7, the same base sequence (for example, a base sequence in which both the group index and the sequence index are the same) may be used, or different base sequences (for example, base sequences with different group indices and/or sequence indices) may be used. Also, between non-contiguous PRBs, the same CS (and OCC) may be applied to the base sequence, or different CSs (and/or OCCs) may be applied to the base sequence.

In the first example of determining the sequence length, a short PUCCH can be mapped to any time and/or frequency resources in PRB units, so that time and/or frequency resources can be used flexibly.

<Second Example of Determining Sequence Length>

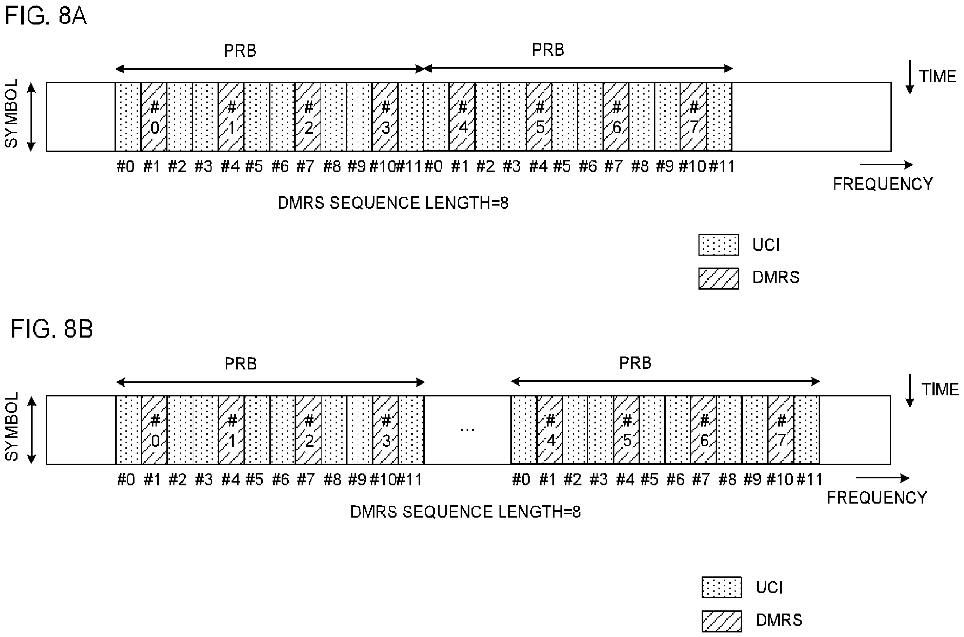

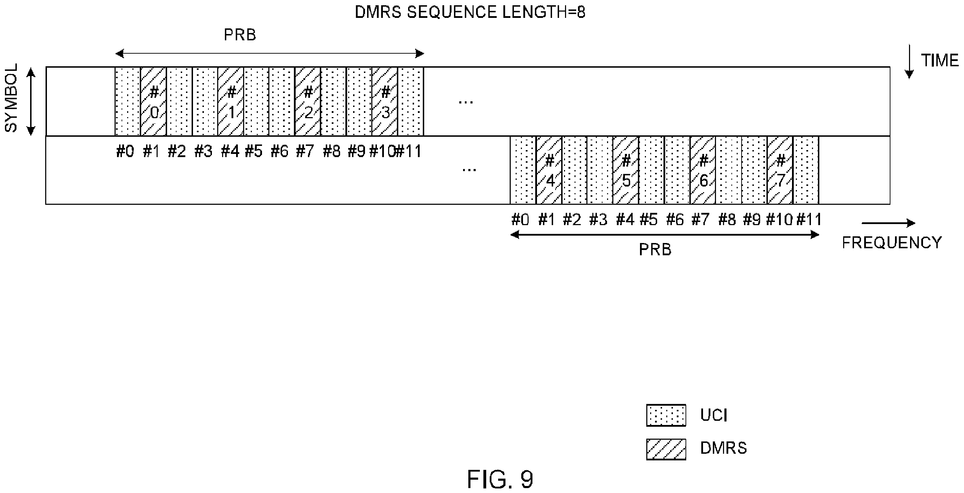

In a second example of determining the sequence length not falling under the scope of protection of the present claims, a user terminal may determine the sequence length of the base sequence of a DMRS based on the number of DMRS REs in all PRBs allocated. FIGs. 8 and FIG. 9 are diagrams to illustrate the second example of determining the sequence length according to the second example. Note that FIGs. 8 and FIG. 9 will primarily focus on differences from FIGs. 6 and FIG. 7.

As shown in FIGs. 8A and 8B, regardless of whether a short PUCCH is comprised of two contiguous PRBs or not, eight DMRS REs are included in a total of two PRBs that constitute the short PUCCH, so that the sequence length of the base sequence of the DMRS may be eight. The same applies when a short PUCCH is comprised of two symbols as shown in FIG. 9.

With the second example of determining the sequence length, a base sequence having a longer sequence length than in the first example of determining the sequence length can be used, so that interference can be reduced between cells and/or between user terminals within a cell.

(Radio Communication System)

Now, the structure of a radio communication system according to the present embodiment will be described below. In this radio communication system, communication is performed using one or a combination of the herein-contained embodiments of the present invention.

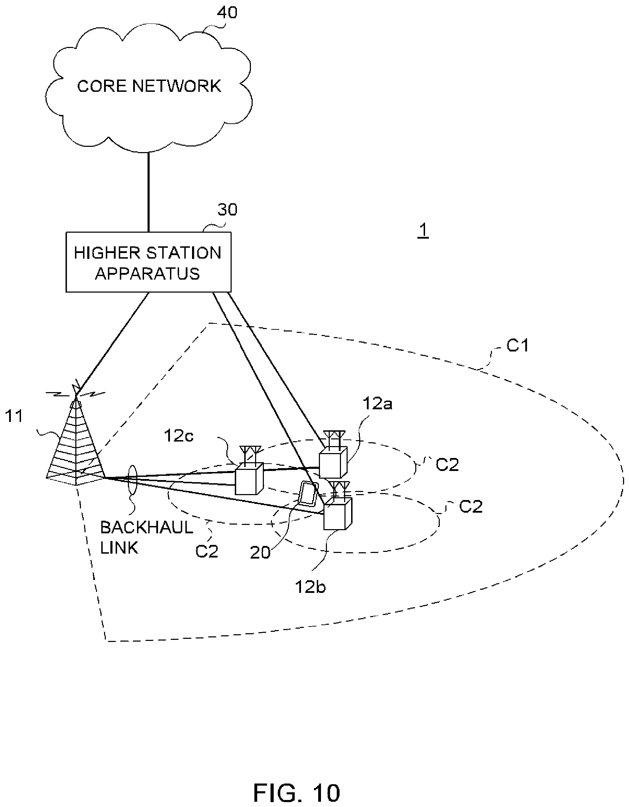

FIG. 10 is a diagram to show an exemplary schematic structure of a radio communication system according to the present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "Long Term Evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "New Radio (NR)," "Future Radio Access (FRA)," "New-RAT (Radio Access Technology)," and so on, or may be seen as a system to implement these.

The radio communication system 1 includes a radio base station 11 that forms a macro cell C1, with a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement and the number of cells and user terminals 20 and so forth are not limited to those illustrated in the drawings.

The user terminals 20 can connect with both the radio base station 11 and the radio base stations 12. The user terminals 20 are expected to use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

The radio base station 11 and a radio base station 12 (or two radio base stations 12) may be connected with each other by cables (for example, by optical fiber, which is in compliance with the Common Public Radio Interface (CPRI), the X2 interface and so on), or by radio.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but these are by no means limiting. Also, each radio base station 12 may be connected with the higher station apparatus 30 via the radio base station 11.

Note that the radio base station 11 is a radio base station having a relatively wide coverage, and may be referred to as a "macro base station," a "central node," an "eNodeB (eNB)," a "transmitting/receiving point" and so on. Also, the radio base stations 12 are radio base stations each having a local coverage, and may be referred to as "small base stations," "micro base stations," "pico base stations," "femto base stations," "Home eNodeBs (HeNBs)," "Remote Radio Heads (RRHs)," "transmitting/receiving points" and so on. Hereinafter, the radio base stations 11 and 12 will be collectively referred to as "radio base stations 10," unless specified otherwise.

The user terminals 20 are terminals that support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands that are each formed with one or contiguous resource blocks, per terminal, and allowing a plurality of terminals to use mutually different bands. Note that the uplink and downlink radio access schemes are not limited to the combinations of these, and other radio access schemes may be used as well.

In the radio communication system 1, a downlink shared channel (Physical Downlink Shared CHannel (PDSCH)), which is used by each user terminal 20 on a shared basis, a broadcast channel (Physical Broadcast CHannel (PBCH)), downlink L1/L2 control channels and so on are used as downlink channels. User data, higher layer control information, System Information Blocks (SIBs) and so on are communicated in the PDSCH. Also, the Master Information Blocks (MIBs) is communicated in the PBCH.

The downlink L1/L2 control channels include a Physical Downlink Control CHannel (PDCCH), an Enhanced Physical Downlink Control CHannel (EPDCCH), a Physical Control Format Indicator CHannel (PCFICH), a Physical Hybrid-ARQ Indicator CHannel (PHICH) and so on. Downlink control information (DCI), which includes PDSCH and/or PUSCH scheduling information, is communicated by the PDCCH.

Note that scheduling information may be reported in DCI. For example, the DCI to schedule receipt of DL data may be referred to as "DL assignment," and the DCI to schedule transmission of UL data may also be referred to as "UL grant."

The number of OFDM symbols to use for the PDCCH is communicated by the PCFICH. Hybrid Automatic Repeat reQuest (HARQ) delivery acknowledgment information (also referred to as, for example, "retransmission control information," "HARQ-ACKs," "ACKs/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (Physical Uplink Shared CHannel (PUSCH)), which is used by each user terminal 20 on a shared basis, an uplink control channel (Physical Uplink Control CHannel (PUCCH)), a random access channel (Physical Random Access CHannel (PRACH)) and so on are used as uplink channels. User data, higher layer control information and so on are communicated by the PUSCH. Also, in the PUCCH, downlink radio quality information (Channel Quality Indicator (CQI)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (Sounding Reference Signals (SRSs)), demodulation reference signals (DMRSs) and so on are communicated as uplink reference signals. Note that the DMRSs may be referred to as "user terminalspecific reference signals (UE-specific reference signals)." Also, the reference signals to be communicated are by no means limited to these.

(Radio Base Station)

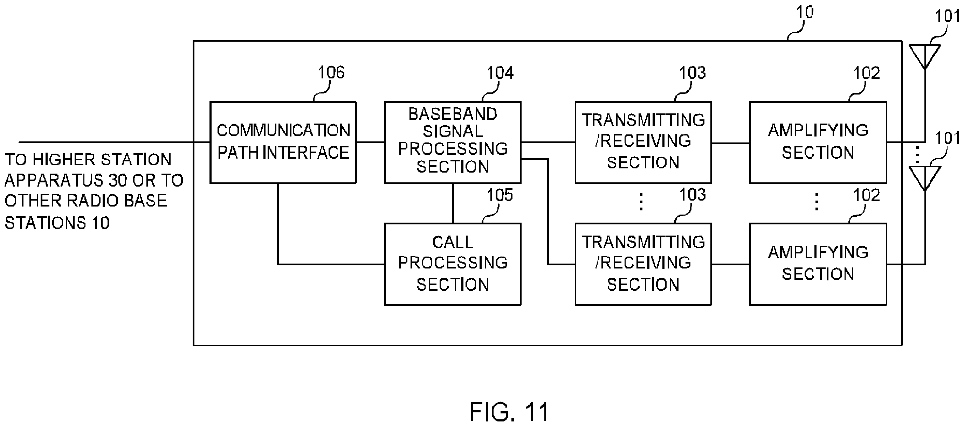

FIG. 11 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30, to the baseband signal processing section 104, via the communication path interface 106.

In the baseband signal processing section 104, the user data is subjected to transmission processes, including a Packet Data Convergence Protocol (PDCP) layer process, user data division and coupling, Radio Link Control (RLC) layer transmission processes such as RLC retransmission control, Medium Access Control (MAC) retransmission control (for example, an Hybrid Automatic Repeat reQuest (HARQ) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base station 10, and manages the radio resources.

The communication path interface section 106 transmits and receives signals to and from the higher station apparatus 30 via a given interface. Also, the communication path interface 106 may transmit and receive signals (backhaul signaling) with other radio base stations 10 via an inter-base station interface (which is, for example, optical fiber that is in compliance with the Common Public Radio Interface (CPRI), the X2 interface, etc.).

In addition, the transmitting/receiving sections 103 transmit downlink signals (for example, at least one of DCI (DL assignment for scheduling downlink data and/or UL grant for scheduling UL data), DL data, DL reference signals and higher layer control information), and receive uplink signals (for example, at least one of uplink data, UCI, and uplink reference signals and higher layer control information).

Furthermore, the transmitting/receiving sections 103 may receive UL control information (UCI) via a PUCCH (which may be a long PUCCH and/or a short PUCCH) or a PUSCH. The transmitting/receiving sections 103 may receive a reference signals (for example, a DMRS that is frequency-division-multiplexed (FDM) and/or time-division-multiplexed (TDM) with UCI). Also, the transmitting/receiving sections 103 may transmit PUCCH resource information.

Here, the UCI may include at least one of PDSCH delivery acknowledgment information (also referred to as "ACK/NACK," "HARQ-ACK," etc.), channel state information (CSI), and a scheduling request (SR).

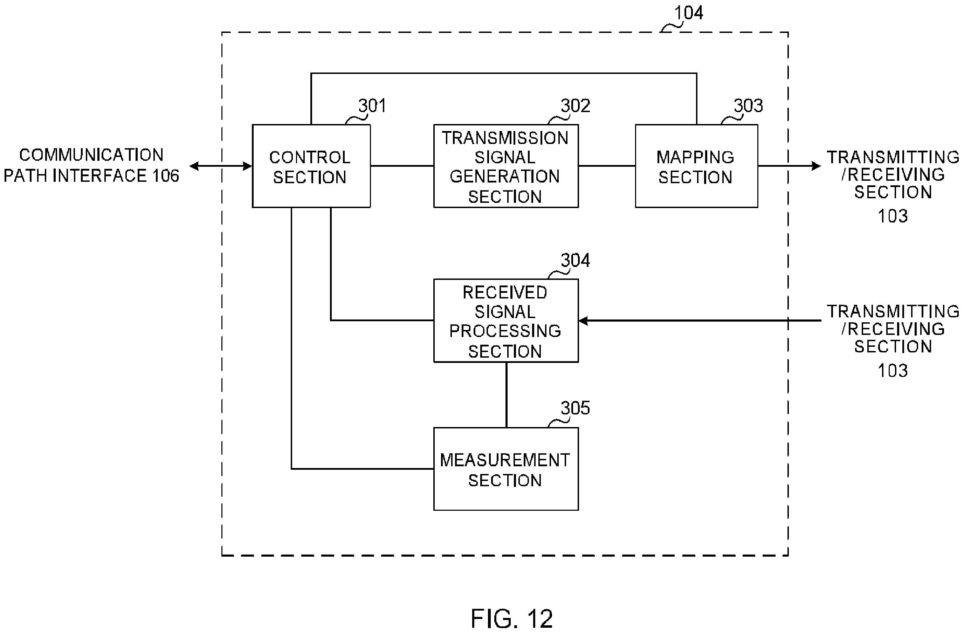

FIG. 12 is a diagram to show an exemplary functional structure of a radio base station according to the present embodiment. Note that, although this example primarily shows functional blocks that pertain to characteristic parts of the present embodiment, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, the generation of signals in the transmission signal generation section 302, the allocation of signals in the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH, such as delivery acknowledgment information). Also, the control section 301 controls the generation of downlink control signals, downlink data signals, and so on, based on the results of deciding whether or not retransmission control is necessary for uplink data signals, and so on.

The control section 301 controls the scheduling of uplink data signals (for example, signals transmitted in the PUSCH), uplink control signals (for example, signals transmitted in the PUCCH and/or the PUSCH, such as delivery acknowledgment information), random access preambles (for example, signals transmitted in the PRACH), uplink reference signals, and so on.

The control section 301 may control the allocation of PUCCH resources. In addition, the control section 301 may control the generation and/or transmission of PUCCH resource information.

The control section 301 may control the sequence length of the base sequence for a reference signal (for example, a DMRS) that is frequency-division-multiplexed (FDM) with UCI. To be more specific, the control section 301 may determine the sequence length of the base sequence of the DMRS based on the number of DMRS REs per PRB. The control section 301 may determine the above sequence length based on the number of contiguous PRBs used to transmit the UCI or based on the total number of PRBs used to transmit the UCI.

The control section 301 may control channel estimation using the reference signal (for example, DMRS) that is frequency-division-multiplexed (FDM) with the UCI, and control the UCI's demodulation based on the result of the channel estimation.

The transmission signal generation section 302 generates downlink signals (downlink control signals, downlink data signals, downlink reference signals, and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, in compliance with DCI format. Also, downlink data signals are subjected to the coding process, the modulation process and so on, by using coding rates, modulation schemes and so forth that are determined based on, for example, channel state information (CSI) from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). The received signal processing section 304 can be constituted by a signal processor, a signal processing circuit or signal processing apparatus that can be described based on general understanding of the technical field to which the present invention pertains.

The received signal processing section 304 outputs the decoded information acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform Radio Resource Management (RRM) measurements, Channel State Information (CSI) measurements, and so on, based on the received signals. The measurement section 305 may measure the received power (for example, Reference Signal Received Power (RSRP)), the received quality (for example, Reference Signal Received Quality (RSRQ), Signal to Interference plus Noise Ratio (SINR), etc.), the signal strength (for example, Received Signal Strength Indicator (RSSI)), transmission path information (for example, CSI) and so on. The measurement results may be output to the control section 301.

(User Terminal)

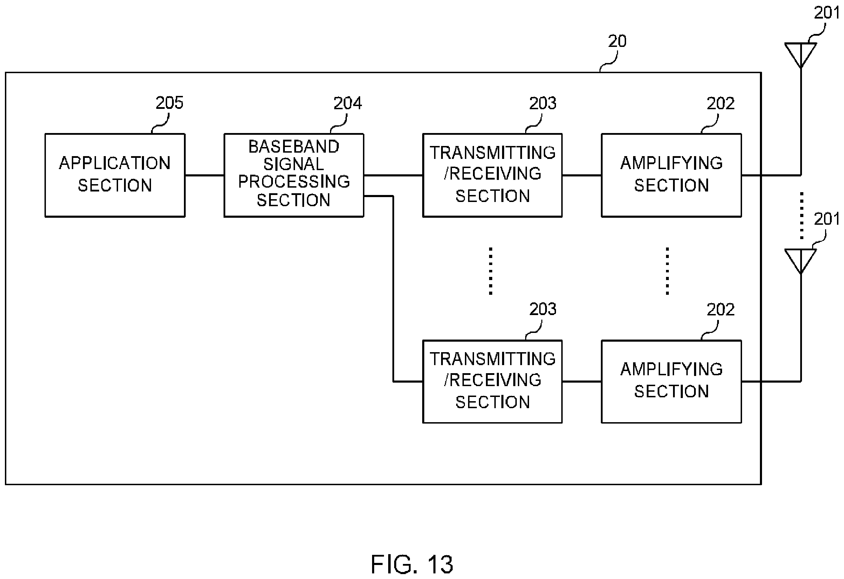

FIG. 13 is a diagram to show an exemplary overall structure of a user terminal according to the present embodiment. A user terminal 20 has a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process, and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203, and transmitted. The radio frequency signals that are subjected to frequency conversion in the transmitting/receiving sections 203 are amplified in the amplifying sections 202, and transmitted from the transmitting/receiving antennas 201.

Also, the transmitting/receiving sections 203 receive downlink signals (for example, at least one of DCI (a DL assignment to schedule downlink data and/or a UL grant to schedule UL data), DL data, a DL reference signals and higher layer control information) and transmits uplink signals (for example, at least one of uplink data, UCI, uplink reference signals and higher layer control information).

Furthermore, the transmitting/receiving sections 203 may transmit UL control information (UCI) via a PUCCH (which may be a long PUCCH and/or a short PUCCH) or a PUSCH. The transmitting/receiving sections 203 may transmit reference signals (for example, a DMRS that is frequency-division-multiplexed (FDM) and/or time-division-multiplexed (TDM) with UCI). Also, the transmitting/receiving sections 203 may transmit PUCCH resource information.

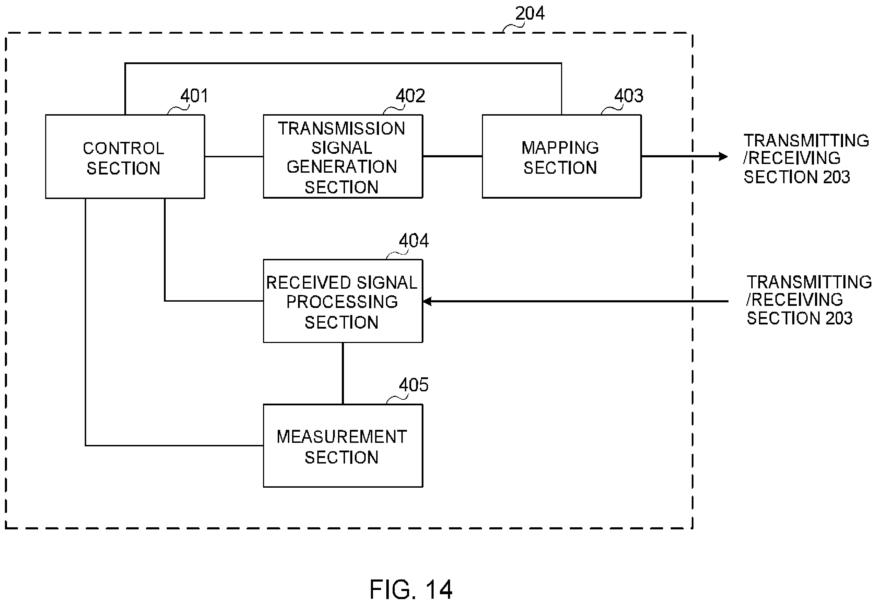

FIG. 14 is a diagram to show an exemplary functional structure of a user terminal according to the present embodiment. Note that, although this example primarily shows functional blocks that pertain to characteristic parts of present embodiment, the user terminal 20 may have other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations have only to be included in the user terminal 20, and some or all of these configurations may not be included in the baseband signal processing section 204.

The control section 401 controls the whole of the user terminal 20. The control section 401 can be constituted by a controller, a control circuit or control apparatus that can be described based on general understanding of the technical field to which the present invention pertains.

The control section 401 controls, for example, the generation of signals in the transmission signal generation section 402, the allocation of signals in the mapping section 403, and so on. Furthermore, the control section 401 controls the signal receiving processes in the received signal processing section 404, the measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on results of deciding whether or not retransmission control is necessary for the downlink control signals and/or downlink data signals, and so on.

The control section 401 controls the generation of a reference signal (for example, a DMRS) that is frequency-division-multiplexed with UCI. To be more specific, the control section 401 controls the sequence of the reference signal based on the base sequence. Also, the control section 401 controls the generation of the base sequence.

Furthermore, the control section 401 controls the switching of the first and second sequences that are used to generate the base sequence, based on the sequence length of the base sequence. Here, the first sequence may be a pseudo-random sequence, and the second sequence may be a CAZAC sequence (for example, a sequence defined in a table (also referred to as a "CG-CAZAC sequence" or the like) and/or a Zadoff-chu (ZC) sequence).

In addition, when the sequence length of the base sequence is greater than or equal to a given threshold, the control section 401 may control the generation of the base sequence based on a Zadoff-chu sequence. In addition, when the sequence length of the base sequence is a given value smaller than the given threshold, the control section 401 may control the generation of the base sequence based on a CG-CAZAC sequence defined in the above-mentioned table. Furthermore, when the sequence length of the base sequence is not the given value that is smaller than the given threshold, the control section 401 may control the generation of the base sequence based on the above pseudo-random sequence (for example, a PN sequence).

Note that, "lower/less than" may be replaced with "lower/less than or equal to," and "higher/greater than or equal to" may be replaced with "higher/greater than."

Also, the control section 401 may determine the sequence length based on the number of subcarriers per resource block to which the reference signal is mapped. Furthermore, the control section 401 may determine the sequence length based on the number of contiguous resource blocks that are used to transmit UCI, or based on the total number of resource blocks that are used to transmit the UCI.

Alternatively, the control section 401 may control the transmission of the PUCCH based on PUCCH resource information reported from the base station.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit, or signal generating apparatus that can be described based on general understanding of the technical field to which the present invention pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) for received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present disclosure.

The received signal processing section 404 outputs the decoded information acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, etc.), the signal strength (for example, RSSI), transmission path information (for example, CSI), and so on. The measurement results may be output to the control section 401.

(Hardware Structure)

Note that the block diagrams that have been used to describe the above embodiment show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logicallyseparate pieces of apparatus (by using cables and/or radio, for example) and using these multiple pieces of apparatus.

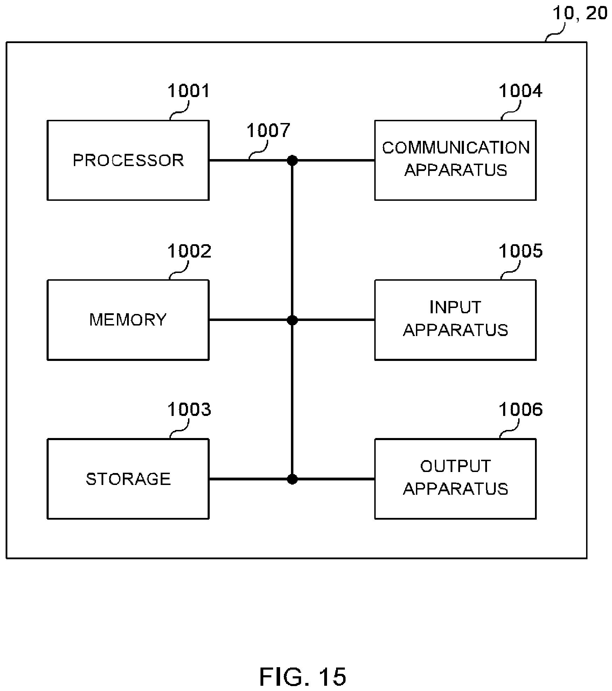

For example, the radio base station, user terminals, and so on according to the present embodiment may function as a computer that executes the processes the radio communication method of the present embodiment. FIG. 15 is a diagram to show an exemplary hardware structure of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, a bus 1007 and so on.

Note that, in the following description, the term "apparatus" may be replaced by "circuit," "device," "unit" and so on. Note that, the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented simultaneously or in sequence, or by using different techniques, on one or more processors. Note that the processor 1001 may be implemented with one or more chips.

The functions of the radio base station 10 and the user terminal 20 are implemented by, for example, allowing hardware such as the processor 1001 and the memory 1002 to read given software (programs), and allowing the processor 1001 to do calculations, control communication that involves the communication apparatus 1004, control the reading and/or writing of data in the memory 1002 and the storage 1003, and so on.

The processor 1001 may control the whole computer by, for example, running an operating system. The processor 1001 may be constituted by a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so forth from the storage 1003 and/or the communication apparatus 1004, into the memory 1002, and executes various processes according to these. As for the programs, programs to allow computers to execute at least part of the operations of the above-described embodiment may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)," and so on. The memory 1002 can store executable programs (program codes), software modules, and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (Compact Disc ROM (CD-ROM) or the like), a digital versatile disc, a Blu-ray (registered trademark) disk, etc.), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using cable and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer and so on, in order to implement, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from outside (for example, a keyboard, a mouse, a microphone, a switch, a button, a sensor and so on). The output apparatus 1006 is an output device for allowing sending output to outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on, are connected by the bus 1007, so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an Application-Specific Integrated Circuit (ASIC), a Programmable Logic Device (PLD), an Field Programmable Gate Array (FPGA) and so on, and part or all of the functional blocks may be implemented by these pieces of hardware. For example, the processor 1001 may be implemented with at least one of these pieces of hardware.

(Variations)

Note that, the terminology used in this specification and the terminology that is needed to understand this specification may be replaced by other terms that communicate the same or similar meanings. For example, a "channel" and/or a "symbol" may be replaced by a "signal" (or "signaling"). Also, a "signal" may be a "message." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency," and so on.

Furthermore, a radio frame may be comprised of one or more periods (frames) in the time domain. One or more periods (frames) that constitute a radio frame may be each referred to as a "subframe." Furthermore, a subframe may be comprised of one or multiple slots in the time domain. A subframe may be a fixed time duration (for example, 1 ms), which does not depend on numerology.

Furthermore, a slot may be comprised of one or more symbols in the time domain (Orthogonal Frequency Division Multiplexing (OFDM) symbols, Single Carrier Frequency Division Multiple Access (SC-FDMA) symbols, and so on). Also, a slot may be a time unit based on numerology. Also, a slot may include a plurality of minislots. Each minislot may be comprised of one or more symbols in the time domain. Also, a minislot may be referred to as a "subslot."

A radio frame, a subframe, a slot, a minislot, and a symbol all refer to a unit of time in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "minislot" and so on, instead of a "subframe."

Here, a TTI refers to the minimum time unit for scheduling in radio communication, for example. For example, in LTE systems, a radio base station schedules the radio resources (such as the frequency bandwidth and transmission power each user terminal can use) to allocate to each user terminal in TTI units. Note that the definition of TTIs is not limited to this.

A TTI may be the transmission time unit of channel-encoded data packets (transport blocks), code blocks and/or codewords, or may be the unit of processing in scheduling, link adaptation, and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit for scheduling may be controlled.

A TTI having a time length of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI (or a "fractional TTI")," a "shortened subframe," a "short subframe," a "minislot," a "sub-slot," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (Physical RB (PRB))," a "subcarrier group (SCG)," a "resource element group (REG)," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, minislots, symbols, and so on described above are simply examples. For example, configurations pertaining to the number of subframes included in a radio frame, the number of slots included in a subframe or a radio frame, the number of minislots included in a slot, the number of symbols and RBs included in a slot or a minislot, the number of subcarriers included in an RB, the number of symbols in a TTI, the symbol duration, the length of cyclic prefixes (CPs), and so on can be variously changed.

Also, the information and parameters described in this specification may be represented in absolute values or in relative values with respect to given values, or may be represented using other applicable information. For example, a radio resource may be specified by a given index.

The names used for parameters and so on in this specification are in no respect limiting. For example, since various channels (Physical Uplink Control CHannel (PUCCH), Physical Downlink Control CHannel (PDCCH) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and so on that are output may be deleted. The information, signals, and so on that are input may be transmitted to other pieces of apparatus.

The method of reporting information is by no means limited to those used in the examples/embodiments described in this specification, and other methods may be used as well. For example, reporting of information may be implemented by using physical layer signaling (for example, downlink control information (DCI), uplink control information (UCI)), higher layer signaling (for example, Radio Resource Control (RRC) signaling, broadcast information (the master information block (MIB), system information blocks (SIBs) and so on), Medium Access Control (MAC) signaling, etc.), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as "RRC messages," and can be, for example, an "RRC connection setup message," "RRC connection reconfiguration message," and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent in an implicit way (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on), and/or wireless technologies (infrared radiation, microwaves, and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell," and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part or all of the coverage area of a base station and/or a base station subsystem that provides communication services within this coverage.

As used herein, the terms "mobile station (MS)," "user terminal," "user equipment (UE)," and "terminal" may be used interchangeably. A base station may be referred to as a "fixed station," "NodeB," "eNodeB (eNB)," "access point," "transmission point," "receiving point," "femto cell," "small cell," and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

Furthermore, the radio base stations in this specification may be interpreted as user terminals. For example, the examples/embodiments of the present disclosure may be applied to a configuration in which communication between a radio base station and a user terminal is replaced with communication among a plurality of user terminals (Device-to-Device (D2D)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, Mobility Management Entities (MMEs), Serving-Gateways (S-GWs), and so on may be possible, but these are not limiting) other than base stations, or combinations of these.

The examples/embodiments illustrated in this specification may be used individually or in combinations, which may be switched depending on the mode of implementation. Also, the order of processes, sequences, flowcharts, and so on that have been used to describe the examples/embodiments herein may be reordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), other adequate radio communication methods, and/or next-generation systems that are enhanced based on these.

The phrase "based on" as used in this specification does not mean "based only on" unless otherwise specified. In other words, the phrase "based on" means both "based only on" and "based at least on."

Reference to elements with designations such as "first," "second," and so on as used herein does not generally limit the number/quantity or order of these elements. These designations are used herein only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database, or some other data structure), ascertaining, and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing, and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be interpreted as "access."

As used herein, when two elements are connected, these elements may be considered "connected" or "coupled" to each other by using one or more electrical wires, cables, and/or printed electrical connections, and, as a number of nonlimiting and non-inclusive examples, by using electromagnetic energy having wavelengths of the radio frequency region, the microwave region and/or the optical region (both visible and invisible).

In the present specification, the phrase "A and B are different" may mean "A and B are different from each other." The terms such as "leave," "coupled" and the like may be interpreted as well.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. Consequently, the description herein is provided only for the purpose of explaining examples, and should by no means be construed to limit the present invention in any way.

## Claims

1. A terminal (20), comprising:

   a transmitting section (203) configured to frequency-division-multiplex and transmit a reference signal that is generated based on a base sequence, with uplink control information; and
   a control section (401) configured to control switching between a first sequence being a pseudo-random sequence and a second sequence being a constant amplitude zero auto-correlation, CAZAC, sequence, that are used to generate the base sequence, based on a sequence length of the base sequence,
   wherein the control section (401) is configured to control the generation of the base sequence based on the CAZAC sequence when the sequence length is a given value and to control the generation of the base sequence based on the first sequence when the sequence length is not the given value.

2. The terminal (20) according to claim 1, wherein:
   the CAZAC sequence is a sequence defined in a table and/or a Zadoff-chu sequence.

3. The terminal (20) according to claim 2, wherein:

   when the sequence length is greater than or equal to a given threshold, the control section (401) is further configured to control the generation of the base sequence based on the Zadoffchu sequence; and
   when the sequence length is the given value that is smaller than the given threshold, the control section (401) is configured to control the generation of the base sequence based on the sequence defined in the table.

4. The terminal (20) according to one of claim 1 to claim 3, wherein the control section (401) is configured to determine the sequence length based on a number of subcarriers per resource block to which the reference signal is mapped.

5. The terminal (20) according to claim 4, wherein the control section (401) is configured to determine the sequence length based on a number of contiguous resource blocks that are used to transmit the uplink control information or based on a total number of resource blocks that are used to transmit the uplink control information.

6. A radio communication method, comprising, in a terminal (20), the steps of:

   frequency-division-multiplexing and transmitting a reference signal that is generated based on a base sequence, with uplink control information; and
   controlling switching between a first sequence being a pseudo-random sequence and a second sequence being a constant amplitude zero auto-correlation, CAZAC, sequence, that are used to generate the base sequence, based on a sequence length of the base sequence,
   wherein the generation of the base sequence is controlled based on the CAZAC sequence when the sequence length is a given value and the generation of the base sequence is controlled based on the first sequence when the sequence length is not the given value.

**Patentansprüche**

1. Endgerät (20), das umfasst:

   einen Übertragungsabschnitt (203), der so konfiguriert ist, dass er ein Referenzsignal, das auf der Grundlage einer Basissequenz erzeugt wird, mit Aufwärtsverbindungssteuerinformationen frequenzmultiplext und überträgt; und
   einen Steuerabschnitt (401), der so konfiguriert ist, dass er ein Umschalten zwischen einer ersten Sequenz, bei der es sich um eine Pseudo-Zufallssequenz handelt, und einer zweiten Sequenz, bei der es sich um eine konstante Amplituden-Null-Autokorrelations-Sequenz, CAZAC, handelt, die zur Erzeugung der Basissequenz verwendet werden, auf der Grundlage einer Sequenzlänge der Basissequenz steuert,
   wobei der Steuerabschnitt (401) so konfiguriert ist, dass er die Erzeugung der Basissequenz auf der Grundlage der CAZAC-Sequenz steuert, wenn die Sequenzlänge ein gegebener Wert ist, und dass er die Erzeugung der Basissequenz auf der Grundlage der ersten Sequenz steuert, wenn die Sequenzlänge nicht der gegebene Wert ist.

2. Endgerät (20) nach Anspruch 1, wobei:
   die CAZAC-Sequenz eine in einer Tabelle definierte Sequenz und/oder eine ZadoffChu-Sequenz ist.

3. Endgerät (20) nach Anspruch 2, wobei:

   wenn die Sequenzlänge größer oder gleich einem gegebenen Schwellenwert ist, der Steuerabschnitt (401) weiter so konfiguriert ist, dass er die Erzeugung der Basissequenz auf der Grundlage der Zadoffchu-Sequenz steuert; und
   wenn die Sequenzlänge der gegebene Wert ist, der kleiner als der gegebene Schwellenwert ist, der Steuerabschnitt (401) so konfiguriert ist, dass er die Erzeugung der Basissequenz auf der Grundlage der in der Tabelle definierten Sequenz steuert.

4. Endgerät (20) nach einem von Anspruch 1 bis Anspruch 3, wobei der Steuerabschnitt (401) so konfiguriert ist, dass er die Sequenzlänge auf der Grundlage einer Anzahl von Unterträgern pro Ressourcenblock bestimmt, auf die das Referenzsignal abgebildet wird.

5. Endgerät (20) nach Anspruch 4, wobei der Steuerabschnitt (401) so konfiguriert ist, dass er die Sequenzlänge auf der Grundlage einer Anzahl von zusammenhängenden Ressourcenblöcken, die zur Übertragung der Aufwärtsverbindungssteuerinformationen verwendet werden, oder auf der Grundlage einer Gesamtzahl von Ressourcenblöcken, die zur Übertragung der Aufwärtsverbindungssteuerinformationen verwendet werden, bestimmt.

6. Funkkommunikationsverfahren, das in einem Endgerät (20) die folgenden Schritte umfasst:

   Frequenzmultiplexen und Übertragen eines Referenzsignals, das auf der Grundlage einer Basissequenz erzeugt wird, mit Aufwärtsverbindungssteuerinformationen; und
   Steuern des Umschaltens zwischen einer ersten Sequenz, bei der es sich um eine Pseudo-Zufallssequenz handelt, und einer zweiten Sequenz, bei der es sich um eine konstante Amplituden-Null-Autokorrelations-Sequenz, CAZAC, handelt, die zur Erzeugung der Basissequenz verwendet werden, auf der Grundlage einer Sequenzlänge der Basissequenz,
   wobei die Erzeugung der Basissequenz auf der Grundlage der CAZAC-Sequenz gesteuert wird, wenn die Sequenzlänge ein gegebener Wert ist, und die Erzeugung der Basissequenz auf der Grundlage der ersten Sequenz gesteuert wird, wenn die Sequenzlänge nicht der gegebene Wert ist.

**Revendications**

1. Terminal (20), comprenant :

   une section de transmission (203) configurée pour multiplexer par répartition en fréquence et transmettre un signal de référence qui est généré sur la base d'une séquence de base, avec des informations de commande de liaison montante ; et
   une section de commande (401) configurée pour commander une commutation entre une première séquence qui est une séquence pseudo-aléatoire et une deuxième séquence qui est une séquence d'amplitude constante à autocorrélation nulle, CAZAC - constant amplitude zéro auto-correlation - , qui sont utilisées pour générer la séquence de base, sur la base d'une longueur de séquence de la séquence de base,

dans lequel la section de commande (401) est configurée pour commander la génération de la séquence de base sur la base de la séquence CAZAC lorsque la longueur de séquence est une valeur donnée et pour commander la génération de la séquence de base sur la base de la première séquence lorsque la longueur de séquence n'est pas la valeur donnée.

**2.** Terminal (20) selon la revendication 1, dans lequel :

la séquence CAZAC est une séquence définie dans un tableau et/ou une séquence Zadoff-chu.

**3.** Terminal (20) selon la revendication 2, dans lequel :

lorsque la longueur de séquence est supérieure ou égale à un seuil donné, la section de commande (401) est en outre configurée pour commander la génération de la séquence de base sur la base de la séquence Zadoffchu ; et

lorsque la longueur de séquence est la valeur donnée qui est inférieure au seuil donné, la section de commande (401) est configurée pour commander la génération de la séquence de base sur la base de la séquence définie dans le tableau.

**4.** Terminal (20) selon une quelconque des revendications 1 à 3, dans lequel la section de commande (401) est configurée pour déterminer la longueur de séquence sur la base d'un nombre de sous-porteuses par bloc de ressources sur lequel le signal de référence est mappé.

**5.** Terminal (20) selon la revendication 4, dans lequel la section de commande (401) est configurée pour déterminer la longueur de séquence sur la base d'un nombre de blocs de ressources contigus qui sont utilisés pour transmettre les informations de commande de liaison montante ou sur la base d'un nombre total de blocs de ressources qui sont utilisés pour transmettre les informations de commande de liaison montante.

**6.** Procédé de radio communication, comprenant, dans un terminal (20), les étapes suivantes :

multiplexer par répartition en fréquence et transmettre un signal de référence qui est généré sur la base d'une séquence de base, avec des informations de commande de liaison montante ; et

commander une commutation entre une première séquence qui est une séquence pseudo-aléatoire et une deuxième séquence qui est une séquence d'amplitude constante à autocorrélation nulle, CAZAC, qui sont utilisées pour générer la séquence de base, sur la base d'une longueur de séquence de la séquence de base, dans lequel la génération de la séquence de base est commandée sur la base de la séquence CAZAC lorsque la longueur de séquence est une valeur donnée et la génération de la séquence de base est commandée sur la base de la première séquence lorsque la longueur de séquence n'est pas la valeur donnée.

## FIG. 1A

1 SLOT

SHORT PUCCH

FREQUENCY

1 SYMBOL    TIME

## FIG. 1B

PRB

SYMBOL

#0  #1  #2  #3  #4  #5  #6  #7  #8  #9  #10  #11

TIME

FREQUENCY

UCI

DMRS

## FIG. 2A

| u | $\varphi(0),\ldots\varphi(11)$ | | | | | | | | | | | |
|---|---|---|---|---|---|---|---|---|---|---|---|---|
| 0 | -1 | 1 | 3 | -3 | 3 | 3 | 1 | 1 | 3 | 1 | -3 | 3 |
| 1 | 1 | 1 | 3 | 3 | 3 | -1 | 1 | -3 | -3 | 1 | -3 | 3 |
| ... | ... | ... | ... | ... | ... | ... | ... | ... | ... | ... | ... | ... |
| 29 | 3 | -3 | -3 | -1 | -1 | -3 | -1 | 3 | -3 | 3 | 1 | -1 |

## FIG. 2B

| u | $\varphi(0),\ldots\varphi(23)$ | | | | | | | | | | | | | | | | | | | | | | | |
|---|---|---|---|---|---|---|---|---|---|---|---|---|---|---|---|---|---|---|---|---|---|---|---|---|
| 0 | -1 | 3 | 1 | -3 | 3 | -1 | 1 | 3 | -3 | 3 | 1 | 3 | -3 | 3 | 1 | 1 | -1 | 1 | 3 | -3 | 3 | -3 | -1 | -3 |
| 1 | -3 | 3 | -3 | -3 | -3 | 1 | -3 | -3 | 3 | -1 | 1 | 1 | 1 | 3 | 1 | -1 | 3 | -3 | -3 | 1 | 3 | 1 | 1 | -3 |
| ... | ... | ... | ... | ... | ... | ... | ... | ... | ... | ... | ... | ... | ... | ... | ... | ... | ... | ... | ... | ... | ... | ... | ... | ... |
| 29 | 1 | 1 | -1 | -1 | -3 | -1 | 3 | -1 | 3 | -1 | 1 | 3 | 1 | -1 | 3 | 1 | 3 | -3 | -3 | 1 | -1 | -1 | 1 | 3 |

## FIG. 2C

| u | $\varphi(0),\ldots\varphi(5)$ | | | | | |
|---|---|---|---|---|---|---|
| 0 | -1 | -3 | 3 | -3 | 3 | -3 |
| 1 | -1 | 3 | -1 | 1 | 1 | 1 |
| ... | ... | ... | ... | ... | ... | ... |
| 29 | 3 | 1 | -1 | 1 | 3 | 1 |

## FIG. 2D

| u | $\varphi(0),\ldots\varphi(17)$ | | | | | | | | | | | | | | | | | |
|---|---|---|---|---|---|---|---|---|---|---|---|---|---|---|---|---|---|---|
| 0 | -3 | -3 | -3 | -3 | -3 | -1 | 1 | -1 | -3 | 3 | -1 | 3 | -1 | 3 | -3 | -1 | -1 | 3 |
| 1 | -3 | -3 | -3 | -3 | -3 | -1 | 1 | -1 | 1 | -3 | -3 | -3 | 1 | -1 | 3 | -3 | -3 | 1 |
| ... | ... | ... | ... | ... | ... | ... | ... | ... | ... | ... | ... | ... | ... | ... | ... | ... | ... | ... |
| 29 | -3 | -3 | -3 | -1 | -3 | 3 | 1 | 1 | -1 | -1 | 1 | 3 | 1 | -3 | 1 | -3 | -1 | 1 |

FIG. 3

## FIG. 4A

PRB#n   PRB#n+1

PRB#n+m

SYMBOL

PUCCH RESOURCE #0   PUCCH RESOURCE #1

PUCCH RESOURCE #2

TIME

FREQUENCY

⬚ SHORT PUCCH

## FIG. 4B

NUMBER OF PRBS=m/I+1

PRB#n   PRB#n+2   PRB#n+4   PRB#n+m

SYMBOL

INTERVAL I

STARTING INDEX #n   PUCCH RESOURCE   ENDING INDEX #n+m

時間

FREQUENCY

⬚ SHORT PUCCH

EP 3 684 021 B1

| INDICATOR FIELD | PUCCH RESOURCE | |
|---|---|---|
| | FOR CAZAC SEQUENCE | FOR PN SEQUENCE |
| 00 | PRB INFORMATION, SYMBOL INFORMATION, CS/OSS INFORMATION, BASE SEQUENCE INFORMATION | PRB INFORMATION, SYMBOL INFORMATION |
| 01 | PRB INFORMATION, SYMBOL INFORMATION, CS/OSS INFORMATION, BASE SEQUENCE INFORMATION | PRB INFORMATION, SYMBOL INFORMATION |
| 10 | PRB INFORMATION, SYMBOL INFORMATION, CS/OSS INFORMATION, BASE SEQUENCE INFORMATION | PRB INFORMATION, SYMBOL INFORMATION |
| 11 | PRB INFORMATION, SYMBOL INFORMATION, CS/OSS INFORMATION, BASE SEQUENCE INFORMATION | PRB INFORMATION, SYMBOL INFORMATION |

FIG. 5

EP 3 684 021 B1

**FIG. 6A**

DMRS SEQUENCE LENGTH=8

UCI
DMRS

**FIG. 6B**

DMRS SEQUENCE LENGTH=4     DMRS SEQUENCE LENGTH=4

UCI
DMRS

FIG. 7

FIG. 8A

PRB                                    PRB

#0 #1 #2 #3 #4 #5 #6 #7 #8 #9 #10#11#0 #1 #2 #3 #4 #5 #6 #7 #8 #9 #10#11

DMRS SEQUENCE LENGTH=8

UCI

DMRS

FIG. 8B

PRB                                    PRB

#0 #1 #2 #3 #4 #5 #6 #7 #8 #9 #10#11        #0 #1 #2 #3 #4 #5 #6 #7 #8 #9 #10#11

DMRS SEQUENCE LENGTH=8

UCI

DMRS

EP 3 684 021 B1

FIG. 9

FIG. 10

FIG. 11

COMMUNICATION
PATH INTERFACE 106

**301** CONTROL SECTION

**302** TRANSMISSION SIGNAL GENERATION SECTION

**303** MAPPING SECTION

TRANSMITTING /RECEIVING SECTION 103

**304** RECEIVED SIGNAL PROCESSING SECTION

TRANSMITTING /RECEIVING SECTION 103

**305** MEASUREMENT SECTION

**104**

FIG. 12

FIG. 13

EP 3 684 021 B1

FIG. 14

FIG. 15

**REFERENCES CITED IN THE DESCRIPTION**

**Non-patent literature cited in the description**

- Evolved Universal Terrestrial Radio Access (E-UTRA) and Evolved Universal Terrestrial Radio Access Network (E-UTRAN); Overall Description; Stage 2 (Release 8). *3GPP TS36.300 V8.12.0,* April 2010